(19) Europäisches Patentamt
European Patent Office
Office européen des brevets

(11) EP 4 386 925 A1

(12) **EUROPEAN PATENT APPLICATION**
published in accordance with Art. 153(4) EPC

(43) Date of publication:
**19.06.2024 Bulletin 2024/25**

(21) Application number: **23853728.6**

(22) Date of filing: **20.10.2023**

(51) International Patent Classification (IPC):
***H01M 10/0569*** (2010.01) ***H01M 4/38*** (2006.01)
***H01M 4/58*** (2010.01) ***H01M 4/60*** (2006.01)
***H01M 10/052*** (2010.01)

(86) International application number:
**PCT/JP2023/038042**

(87) International publication number:
**WO 2024/095796 (10.05.2024 Gazette 2024/19)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**KH MA MD TN**

(30) Priority: **04.11.2022 JP 2022177356**

(71) Applicants:
- **The School Corporation Kansai University Suita-shi, Osaka 564-8680 (JP)**
- **DAIKIN INDUSTRIES, LTD. Osaka 530-0001 (JP)**

(72) Inventors:
- **ISHIKAWA, Masashi Suita-shi, Osaka 564-8680 (JP)**
- **OKUDA, Daisuke Suita-shi, Osaka 564-8680 (JP)**
- **MURATA, Chihiro Suita-shi, Osaka 564-8680 (JP)**
- **HIDAKA, Tomoya Osaka-shi, Osaka 530-0001 (JP)**
- **YAMAZAKI, Shigeaki Osaka-shi, Osaka 530-0001 (JP)**
- **MARI, Daichi Osaka-shi, Osaka 530-0001 (JP)**

(74) Representative: **Hoffmann Eitle Patent- und Rechtsanwälte PartmbB Arabellastraße 30 81925 München (DE)**

# (54) ELECTROLYTE SOLUTION, LITHIUM SULFUR SECONDARY BATTERY AND MODULE

(57) Provided is an electrolyte solution capable of providing a lithium-sulfur secondary battery that has excellent cycle characteristics and that is less likely to generate gas. The electrolyte solution is intended to be used in a lithium-sulfur secondary battery that includes: a positive electrode containing a sulfur-containing electrode active material that includes at least one selected from the group consisting of simple sulfur, lithium polysulfide ($Li_2S_n$: 1 < n < 8), an organic sulfur compound, and an inorganic sulfur compound; and a negative electrode containing a material that occludes and releases a lithium ion. The electrolyte solution contains a non-aqueous electrolyte and a solvent. The solvent contains an acyclic diether having a $\Sigma\{\sigma \times P(\sigma)\}$ value, where $\sigma \geq 0.01$ (e/Å$^2$), falling within a range indicated by the following formula (1) :

$$0 < \Sigma\{\sigma \times P(\sigma)\} < 0.24 \quad (1)$$

wherein $\sigma$ represents a screening charge density and $P(\sigma)$ represents an $\sigma$-profile.

EP 4 386 925 A1

## Description

TECHNICAL FIELD

The disclosure relates to electrolyte solutions, lithium-sulfur secondary batteries, and modules.

BACKGROUND ART

High-capacity secondary batteries that are widely spread include lithium ion secondary batteries. Lithium-sulfur secondary batteries have also been examined as higher capacity secondary batteries. The performance of these various batteries is greatly influenced by the performance of their electrolyte solutions.

Patent Literature 1 discloses a lithium-sulfur secondary battery containing a solvent containing vinylene carbonate.

CITATION LIST

- Patent Literature

Patent Literature 1: WO 2021/090666

SUMMARY OF INVENTION

- Technical Problem

The disclosure aims to provide an electrolyte solution capable of providing a lithium-sulfur secondary battery that has excellent cycle characteristics and that is less likely to generate gas.

- Solution to Problem

The disclosure (1) relates to an electrolyte solution for use in a lithium-sulfur secondary battery that includes: a positive electrode containing a sulfur-containing electrode active material that includes at least one selected from the group consisting of simple sulfur, lithium polysulfide ($Li_2S_n$: $1 < n < 8$), an organic sulfur compound, and an inorganic sulfur compound; and a negative electrode containing a material that occludes and releases a lithium ion,

the electrolyte solution containing: a non-aqueous electrolyte; and a solvent,
the solvent containing an acyclic diether having a $\Sigma\{\sigma \times P(\sigma)\}$ value, where $\sigma \geq 0.01$ (e/Å$^2$), falling within a range indicated by the following formula (1):

$$0 < \Sigma\{\sigma \times P(\sigma)\} < 0.24 \quad (1)$$

wherein $\sigma$ represents a screening charge density and $P(\sigma)$ represents an $\sigma$-profile.

The disclosure (2) relates to the electrolyte solution according to the disclosure (1), wherein the acyclic diether is a fluorinated acyclic diether.

The disclosure (3) relates to the electrolyte solution according to the disclosure (1) or (2), wherein the acyclic diether includes at least one selected from the group consisting of a compound represented by the following formula (A) or a compound represented by the following formula (B),

the formula (A) being:

[Chem. 1]

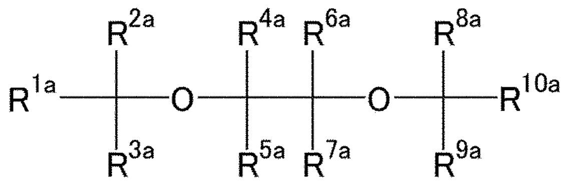

wherein $R^{1a}$ to $R^{10a}$ are each independently a halogen atom, a hydrogen atom, an alkyl group having a carbon number of 2 or smaller, or a fluorinated alkyl group having a carbon number of 2 or smaller, and at least one of $R^{1a}$ to $R^{10a}$ is a halogen atom or a fluorinated alkyl group having a carbon number of 2 or smaller,
the formula (B) being:

[Chem. 2]

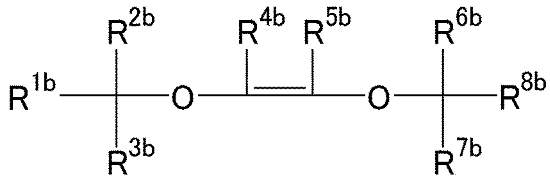

wherein $R^{1b}$ to $R^{8b}$ are each independently a halogen atom, a hydrogen atom, an alkyl group having a carbon number of 2 or smaller, or a fluorinated alkyl group having a carbon number of 2 or smaller.

The disclosure (4) relates to an electrolyte solution combined with any one of the disclosures (1) to (3), wherein the acyclic diether includes at least one selected from the group consisting of compounds represented by the following formulas:

[Chem. 3]

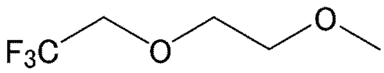 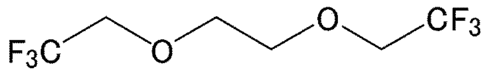

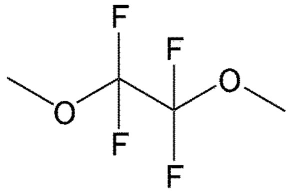 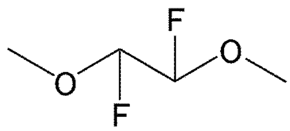

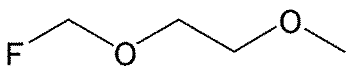 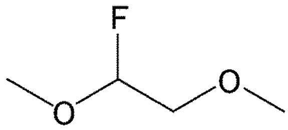

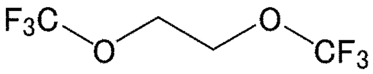 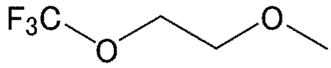

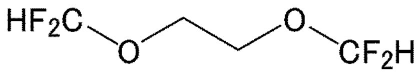 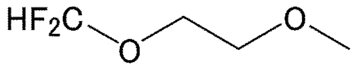

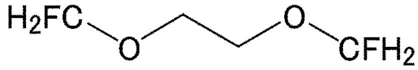

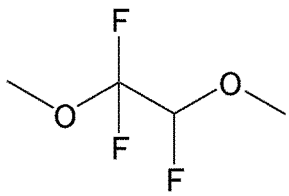 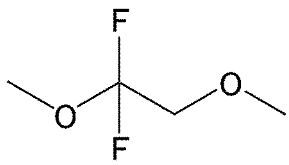

The disclosure (5) relates to an electrolyte solution combined with any one of the disclosures (1) to (4), wherein the acyclic diether is contained in an amount of 3 to 90% by mass of a whole amount of the electrolyte solution.

The disclosure (6) relates to a lithium-sulfur secondary battery including: a positive electrode containing a sulfur-containing electrode active material that includes at least one selected from the group consisting of simple sulfur, lithium polysulfide ($Li_2S_n$: $1 < n < 8$), an organic sulfur compound, and an inorganic sulfur compound; and a negative electrode containing a material that occludes and releases a lithium ion, wherein an electrolyte solution combined with any one of the disclosures (1) to (5) is used.

The disclosure (7) relates to a module including the lithium-sulfur secondary battery according to the disclosure (6).

- Advantageous Effects of Invention

The disclosure can provide an electrolyte solution capable of providing a lithium-sulfur secondary battery that has excellent cycle characteristics and that is less likely to generate gas.

DESCRIPTION OF EMBODIMENTS

The disclosure will be specifically described below.

The disclosure provides an electrolyte solution for use in a lithium-sulfur secondary battery that includes: a positive electrode containing a sulfur-containing electrode active material that includes at least one selected from the group consisting of simple sulfur, lithium polysulfide ($Li_2S_n$: $1 < n < 8$), an organic sulfur compound, and an inorganic sulfur compound; and a negative electrode containing a material that occludes and releases a lithium ion. The electrolyte

solution contains a non-aqueous electrolyte and a solvent. The solvent contains an acyclic diether having a $\Sigma\{\sigma \times P(\sigma)\}$ value, where $\sigma \geq 0.01$ (e/Å$^2$), falling within a range indicated by the following formula (1) :

$$0 < \Sigma\{\sigma \times P(\sigma)\} < 0.24$$

wherein $\sigma$ represents a screening charge density and $P(\sigma)$ represents an $\sigma$-profile.

The electrolyte solution of the disclosure contains a solvent that contains an acyclic diether (hereinafter, also referred to as an acyclic diether (1)) having a $\Sigma\{\sigma \times P(\sigma)\}$ value, where $\sigma \geq 0.01$ (e/Å$^2$), falling within the aforementioned range, and can therefore provide a lithium-sulfur secondary battery that has excellent cycle characteristics and that is less likely to generate gas.

The acyclic diether (1) is found to not coordinate with sulfur but coordinate with lithium. Using an acyclic diether having this specific feature can more effectively reduce dissolution and diffusion of lithium polysulfide ($Li_2S_n$) generated by the electrode reactions during charge and discharge of a lithium-sulfur secondary battery than using a conventional solvent such as fluorinated monoether or vinylene carbonate. This can resultantly improve the cycle characteristics (discharge capacity after charge and discharge cycles) and reduce generation of gas. In contrast, fluorinated monoether coordinates with neither lithium nor sulfur, failing to reduce diffusion of lithium polysulfide. Vinylene carbonate can seemingly form a coating film of vinylene carbonate on a sulfur positive electrode to reduce dissolution of lithium polysulfide to some extent, but this reducing effect is insufficient.

The $\Sigma\{\sigma \times P(\sigma)\}$ value of the acyclic diether (1) is not lower than 0 and may be 0.00001 or higher. To further improve the cycle characteristics, this value is preferably 0.01 or higher, more preferably 0.10 or higher, still more preferably 0.12 or higher, further preferably 0.14 or higher, particularly preferably 0.16 or higher, most preferably 0.17 or higher.

Also, the $\Sigma\{\sigma \times P(\sigma)\}$ value of the acyclic diether (1) is lower than 0.24. To further reduce generation of gas, this value is preferably 0.23 or lower, more preferably 0.22 or lower, still more preferably 0.21 or lower, further preferably 0.20 or lower.

In the formula (1), $\sigma$ represents the screening charge density and $P(\sigma)$ represents the $\sigma$-profile.

The screening charge density $\sigma$ corresponds to the charge density on the surface of a molecule calculated by the conductor like screening model for real solvents (COSMO-RS).

The $\sigma$-profile $P(\sigma)$ is calculated by dividing the surface of a molecule into segments of a predetermined area and indicates the frequency of the segments of the corresponding screening charge density.

The $\sigma \times P(\sigma)$ value is the product of the charge density and the number of the segments and indicates the charge density distribution of the surface of a molecule.

The $\Sigma\{\sigma \times P(\sigma)\}$ value indicates the sum of $\sigma \times P(\sigma)$ values within the range of $\sigma \geq 0.01$ (e/Å$^2$).

This range of $\sigma \geq 0.01$ (e/Å$^2$) leads to a high Lewis basicity on the surface of a molecule, which seems to be advantageous in forming molecular interactions such as coordination bond and hydrogen bond. Thus, the acyclic diether having a low $\Sigma\{\sigma \times P(\sigma)\}$ value within this range (the value falling within the aforementioned range) can have low coordinating force to lithium polysulfide and can thereby reduce dissolution of lithium polysulfide into the electrolyte solution.

The screening charge density $\sigma$ and the $\sigma$-profile $P(\sigma)$ can be calculated using software "COSMOtherm" available from Molsis Inc.

The acyclic diether (1) may include at least one selected from the group consisting of a compound represented by the following formula (A) (hereinafter, also referred to as a compound (A)) and a compound represented by the following formula (B) (hereinafter, also referred to as a compound (B)),

the formula (A) being:

[Chem. 4]

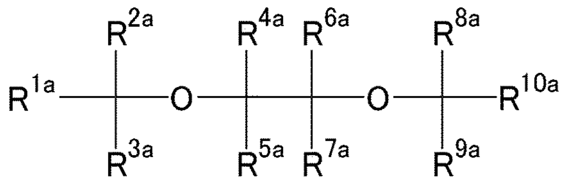

wherein $R^{1a}$ to $R^{10a}$ are each independently a halogen atom, a hydrogen atom, an alkyl group having a carbon number of 2 or smaller, or a fluorinated alkyl group having a carbon number of 2 or smaller, and at least one of $R^{1a}$

to $R^{10a}$ is a halogen atom or a fluorinated alkyl group having a carbon number of 2 or smaller, the formula (B) being:

[Chem. 5]

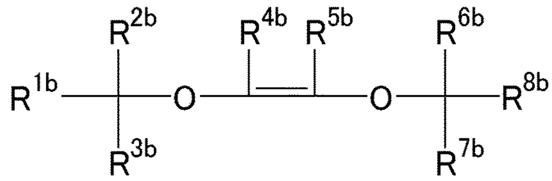

wherein $R^{1b}$ to $R^{8b}$ are each independently a halogen atom, a hydrogen atom, an alkyl group having a carbon number of 2 or smaller, or a fluorinated alkyl group having a carbon number of 2 or smaller.

Examples of the halogen atom for $R^{1a}$ to $R^{10a}$ in the formula (A) include a fluorine atom, a chlorine atom, a bromine atom, and an iodine atom. Preferred are a fluorine atom and a chlorine atom, and more preferred is a fluorine atom.

The alkyl group for $R^{1a}$ to $R^{10a}$ in the formula (A) may be an alkyl group free from a fluorine atom and may be an alkyl group free from a halogen atom. Examples of the alkyl group include $-CH_3$ and $-CH_2CH_3$, and preferred is $-CH_3$.

Examples of the fluorinated alkyl group for $R^{1a}$ to $R^{10a}$ in the formula (A) include $-CF_3$, $-CHF_2$, $-CH_2F$, $-CH_2CF_3$, $-CF_2CF_3$, $-CH_2CHF_2$, and $-CH_2CH_2F$.

The fluorinated alkyl group is preferably a C1 fluorinated alkyl group, i.e., $-CF_3$, $-CHF_2$, or $-CH_2F$, more preferably $-CF_3$.

In the formula (A), at least one of $R^{1a}$ to $R^{10a}$ is a halogen atom or a fluorinated alkyl group having a carbon number of 2 or smaller, preferably a fluorine atom or a fluorinated alkyl group having a carbon number of 2 or smaller.

In the formula (A), preferably, $R^{1a}$ to $R^{3a}$ and $R^{8a}$ to $R^{10a}$ are each independently a halogen atom, a hydrogen atom, or a fluorinated alkyl group having a carbon number of 2 or smaller and $R^{4a}$ to $R^{7a}$ are each independently a halogen atom or a hydrogen atom; or preferably, $R^{1a}$ to $R^{3a}$ and $R^{8a}$ to $R^{10a}$ are each independently a fluorine atom, a hydrogen atom, or a fluorinated alkyl group having a carbon number of 2 or smaller and $R^{4a}$ to $R^{7a}$ are each independently a fluorine atom or a hydrogen atom.

Examples of the compound (A) include compounds represented by the following formulas.

[Chem. 6]

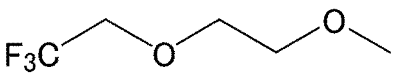 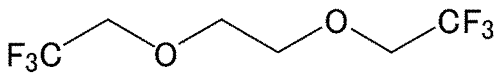

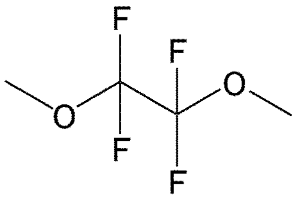 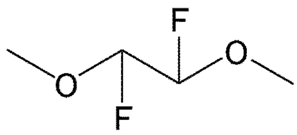

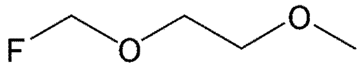 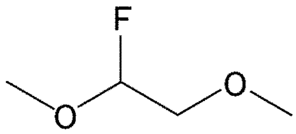

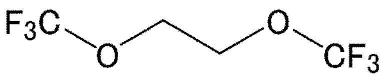 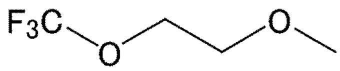

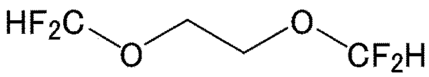 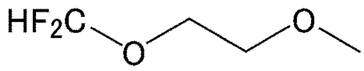

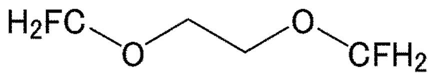

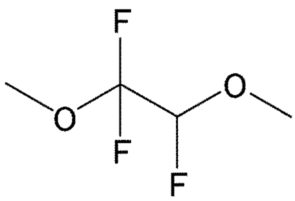 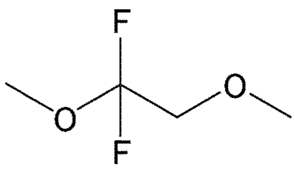

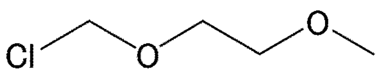

Examples of the halogen atom for $R^{1b}$ to $R^{8b}$ in the formula (B) include a fluorine atom, a chlorine atom, a bromine atom, and an iodine atom. Preferred are a fluorine atom and a chlorine atom, and more preferred is a fluorine atom.
The alkyl group for $R^{1b}$ to $R^{8b}$ in the formula (B) may be an alkyl group free from a fluorine atom and may be an alkyl group free from a halogen atom. Examples of the alkyl group include $-CH_3$ and $-CH_2CH_3$, and preferred is $-CH_3$.
Examples of the fluorinated alkyl group for $R^{1b}$ to $R^{8b}$ in the formula (B) include $-CF_3$, $-CHF_2$, $-CH_2F$, $-CH_2CF_3$, $-CF_2CF_3$, $-CH_2CHF_2$, and $-CH_2CH_2F$.
The fluorinated alkyl group is preferably a C1 fluorinated alkyl group, i.e., $-CF_3$, $-CHF_2$, or $-CH_2F$, more preferably $-CF_3$.
An example of the compound (B) is a compound represented by the following formula.

[Chem. 7]

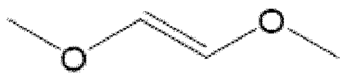

The acyclic diether (1) is preferably a fluorinated acyclic diether.

The acyclic diether (1) is preferably a compound (A), and more preferably includes at least one selected from the group consisting of compounds represented by the following formulas.

[Chem. 8]

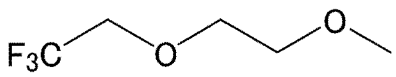

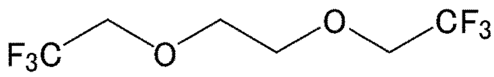

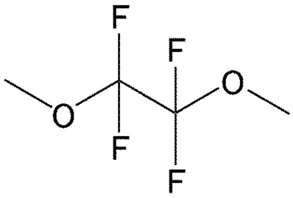

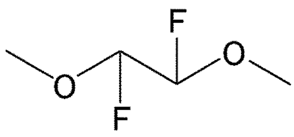

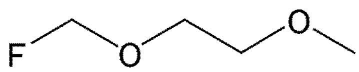

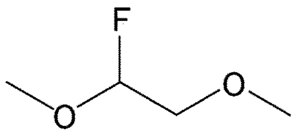

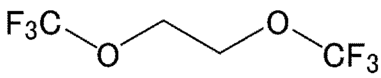

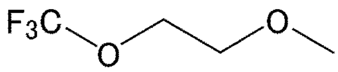

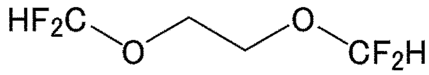

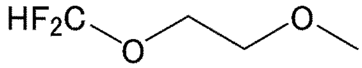

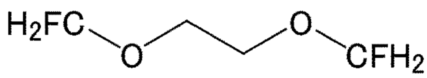

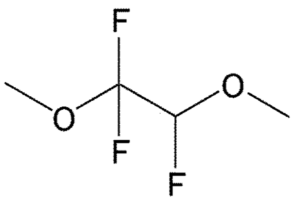

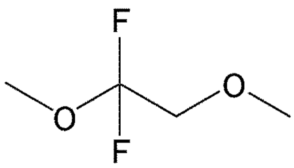

The acyclic diether (1) still more preferably includes at least one selected from the group consisting of compounds represented by the following formulas.

[Chem. 9]

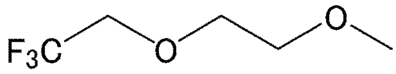

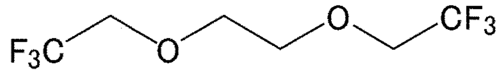

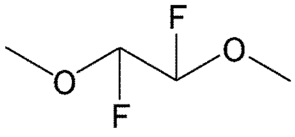

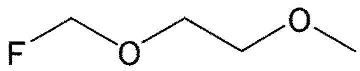

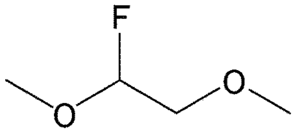

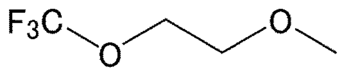

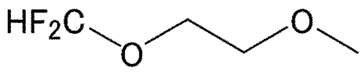

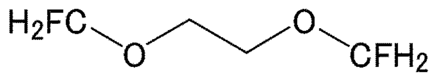

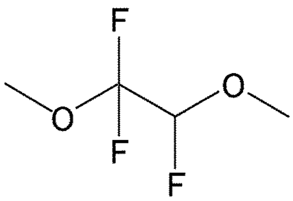

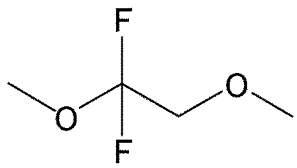

The acyclic diether (1) particularly preferably includes at least one selected from the group consisting of compounds represented by the following formulas.

[Chem. 10]

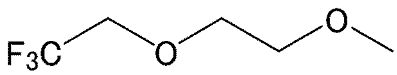

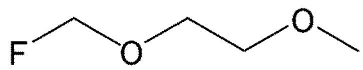

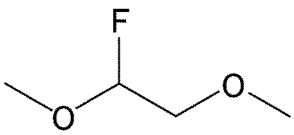

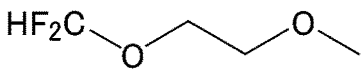

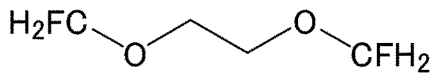

To further improve the cycle characteristics and further reduce generation of gas, the acyclic diether (1) is preferably contained in an amount of 3 to 90% by mass of the whole amount of the electrolyte solution. The amount is more preferably 5% by mass or more, still more preferably 10% by mass or more, further preferably 25% by mass or more, further preferably 30% by mass or more, further preferably 35% by mass or more, particularly preferably 40% by mass or more, while more preferably 80% by mass or less, still more preferably 70% by mass or less, further preferably 65% by mass or less, particularly preferably 60% by mass or less.

The electrolyte solution of the disclosure contains a solvent that contains the aforementioned acyclic diether (1) .

The "solvent" herein means a compound having volatility among the liquid components contained in the electrolyte solution. An electrolyte solution of a lithium-sulfur battery contains a non-aqueous electrolyte. This non-aqueous electrolyte is a component having no volatility. The "solvent" in the disclosure is used in combination with such a non-aqueous electrolyte in the electrolyte solution, and means a volatile liquid compound among, for example, a variety of carbonate compounds, ether compounds, and ester compounds. Two or more of these may be used in combination.

The solvent is preferably a non-aqueous solvent, and the electrolyte solution of the disclosure is preferably a non-aqueous electrolyte solution.

The electrolyte solution of the disclosure may contain a solvent (hereinafter, referred to as a "different solvent") other than the acyclic diether (1).

The different solvent used may be, but is not limited to, any type of solvent that can be used as a solvent in an electrolyte solution in the field of battery. Specific examples thereof include vinylene carbonate, a fluorinated saturated cyclic carbonate, a fluorinated acyclic carbonate, an ether compound other than the acyclic diether (1), a fluorinated ether other than the acyclic diether (1), and a fluorinated ester.

These different solvents are specifically described below.

(Vinylene carbonate)

Vinylene carbonate is a compound represented by the following formula (3).

[Chem. 11]

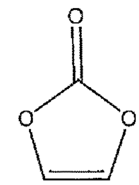

(3)

The solvent containing vinylene carbonate in addition to the acyclic diether (1) can provide a lithium-sulfur secondary battery having much better cycle characteristics.

Such improvement in the cycle characteristics owing to vinylene carbonate presumably results from formation of a coating film of vinylene carbonate on the sulfur positive electrode.

(Fluorinated saturated cyclic carbonate)

The fluorinated saturated cyclic carbonate is preferably one represented by the following formula (4):

[Chem. 12]

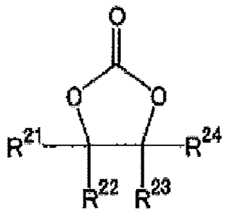

(4)

wherein $R^{21}$ to $R^{24}$ are the same as or different from each other, and are each -H, $-CH_3$, -F, a fluorinated alkyl group optionally containing an ether bond, or a fluorinated alkoxy group optionally containing an ether bond, and at least one of $R^{21}$ to $R^{24}$ is -F, a fluorinated alkyl group optionally containing an ether bond, or a fluorinated alkoxy group optionally containing an ether bond.

The fluorinated alkyl group is preferably one having a carbon number of 1 to 10, more preferably one having a carbon number of 1 to 6, still more preferably one having a carbon number of 1 to 4.

The fluorinated alkyl group may be linear or branched.

The fluorinated alkoxy group is preferably one having a carbon number of 1 to 10, more preferably one having a carbon number of 1 to 6, still more preferably one having a carbon number of 1 to 4.

The fluorinated alkoxy group may be linear or branched.

$R^{21}$ to $R^{24}$ are the same as or different from each other, and each preferably include at least one selected from the group consisting of -H, $-CH_3$, -F, $-CF_3$, $-C_4F_9$, $-CHF_2$, $-CH_2F$, $-CH_2CF_2CF_3$, $-CH_2-CF(CF_3)_2$, $-CH_2-O-CH_2CHF_2CF_2H$, $-CH_2CF_3$, and $-CF_2CF_3$.

In this case, at least one of $R^{21}$ to $R^{24}$ includes at least one selected from the group consisting of -F, $-CF_3$, $-C_4F_9$, $-CHF_2$, $-CH_2F$, $-CH_2CF_2CF_3$, $-CH_2-CF(CF_3)_2$, $-CH_2-O-CH_2CHF_2CF_2H$, $-CH_2CF_3$, and $-CF_2CF_3$.

The fluorinated saturated cyclic carbonate preferably includes at least one selected from the group consisting of the following compounds.

[Chem. 13]

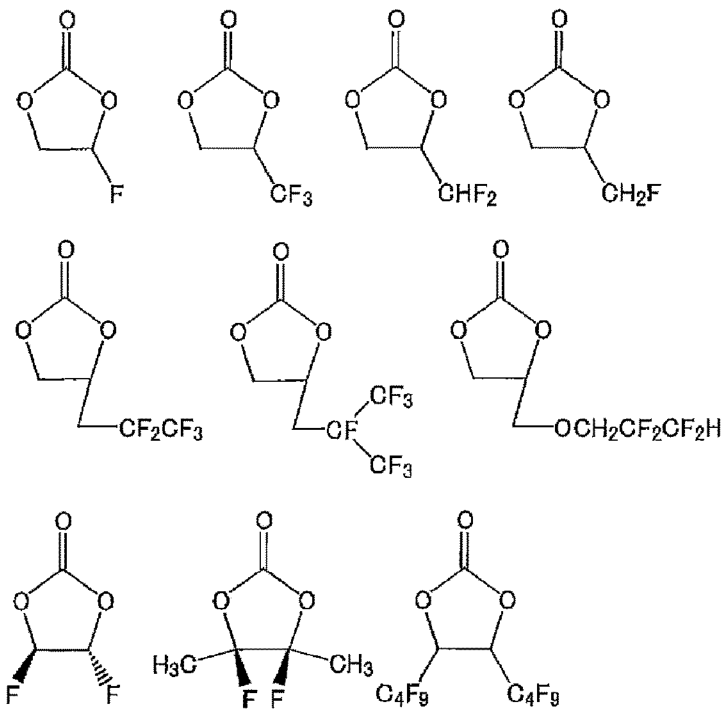

In the disclosure, the different solvent is more preferably, among the saturated cyclic carbonates, a compound represented by the following formula:

[Chem. 14]

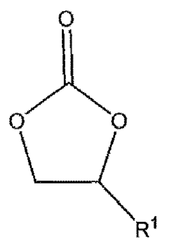

(1)

wherein $R^1$ is a fluorine group or a C1-C4 alkyl group containing a fluorine group and optionally containing an ether bond and/or an unsaturated bond.

This compound is particularly preferred so as to improve the output of a battery. Further, most preferred is using fluoroethylene carbonate represented by the following formula.

[Chem. 15]

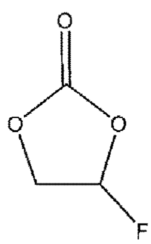

(Fluorinated acyclic carbonate)

The fluorinated acyclic carbonate is preferably one represented by the following formula:

[Chem. 16]

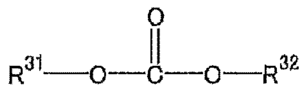

wherein $R^{31}$ and $R^{32}$ are the same as or different from each other, and are each an alkyl group optionally containing an ether bond and optionally containing a fluorine atom, and either $R^{31}$ or $R^{32}$ contains a fluorine atom.

The alkyl group is preferably one having a carbon number of 1 to 10, more preferably one having a carbon number of 1 to 6, still more preferably one having a carbon number of 1 to 4.

The alkyl group may be linear or branched.

$R^{31}$ and $R^{32}$ are the same as or different from each other, and each preferably include at least one selected from the group consisting of $-CH_3$, $-CF_3$, $-CHF_2$, $-CH_2F$, $-C_2H_5$, $-CH_2CF_3$, $-CH_2CHF_2$, and $-CH_2CF_2CF_2H$.

In this case, at least one selected from $R^{31}$ and $R^{32}$ includes at least one selected from the group consisting of $-CF_3$, $-CHF_2$, $-CH_2F$, $-CH_2CHF_2$, $-CH_2CF_3$, and $-CH_2CF_2CF_2H$.

The fluorinated acyclic carbonate preferably includes at least one selected from the group consisting of the following compounds.

[Chem. 17]

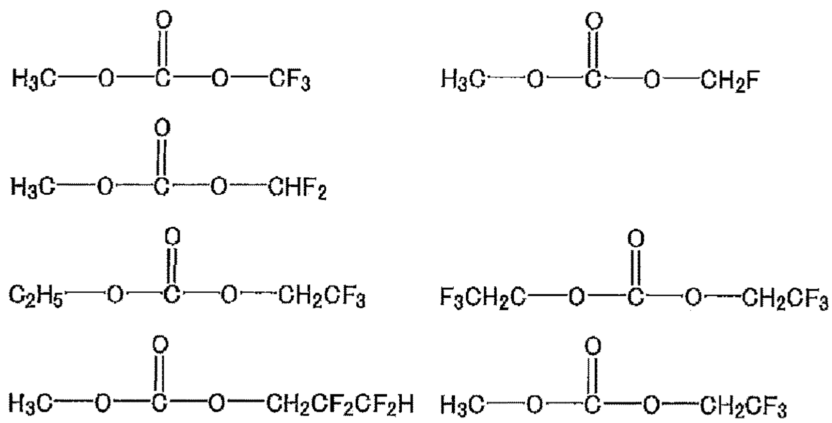

(Fluorinated ester)

The fluorinated ester is preferably one represented by the following formula:

[Chem. 18]

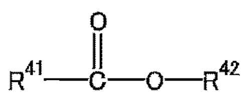

wherein $R^{41}$ and $R^{42}$ are the same as or different from each other, and are each an alkyl group optionally containing an ether bond and optionally containing a fluorine atom, and optionally bond to each other to form a ring, and one selected from $R^{41}$ and $R^{42}$ contains a fluorine atom.

The alkyl group is preferably one having a carbon number of 1 to 10, more preferably one having a carbon number of 1 to 6, still more preferably one having a carbon number of 1 to 4.

The alkyl group may be linear or branched.

$R^{41}$ and $R^{42}$ are the same as or different from each other, and each preferably include at least one selected from the group consisting of $-CH_3$, $-C_2H_5$, $-CHF_2$, $-CH_2F$, $-CH(CF_3)_2$, $-CHFCF_3$, $-CF_3$, and $-CH_2CF_3$.

In this case, at least one selected from $R^{41}$ and $R^{42}$ includes at least one selected from the group consisting of $-CHF_2$, $-CH(CF_3)_2$, $-CHFCF_3$, $-CF_3$, and $-CH_2CF_3$.

The expression "$R^{41}$ and $R^{42}$ bond to each other to form a ring" means $R^{41}$ and $R^{42}$ form a ring together with the carbon atom and the oxygen atom to which $R^{41}$ and $R^{42}$ respectively bond. $R^{41}$ and $R^{42}$ serve as a fluorinated alkylene group to constitute part of the ring. In the case where $R^{41}$ and $R^{42}$ bond to each other to form a ring, $R^{41}$ and

$R^{42}$ preferably include at least one selected from the group consisting of $-CH_2CH_2CH(CH_2CF_3)-$, $-CH(CF_3)CH_2CH_2-$, $-CHFCH_2CH_2-$, $-CH_2CH_2CHF-$, and $-CH_2CH_2CH(CF_3)-$.

The fluorinated ester preferably includes at least one selected from the group consisting of the following compounds.

[Chem. 19]

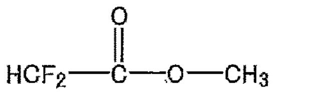
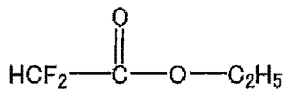
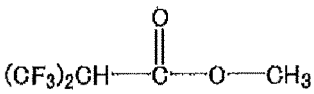
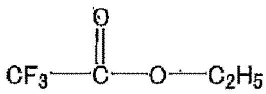
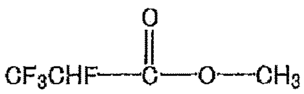
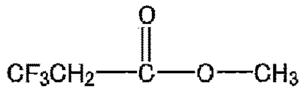
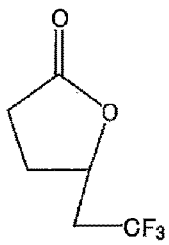
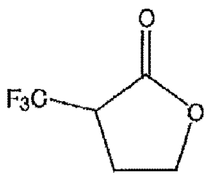
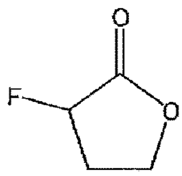

(Ether compound)

The ether compound suitably used may be a compound represented by the following formula (2) other than the acyclic diether (1):

$$R^2\text{-}(OCHR^3CH_2)_x\text{-}OR^3 \qquad (2)$$

wherein $R^2$ and $R^3$s are each independently selected from the group consisting of a C1-C9 alkyl group optionally substituted with fluorine, a phenyl group optionally substituted with a halogen atom, and a cyclohexyl group optionally substituted with a halogen atom, and may together form a ring; $R^3$s are each independently H or $CH_3$; and x is 0 to 10.

The compounds represented by the aforementioned formula (2) are classified into a non-fluorinated ether compound and a fluorinated ether compound. Hereinafter, the ether compounds are specifically described separately for the non-fluorinated ether compound and the fluorinated ether compound.

(Non-fluorinated ether compound)

The non-fluorinated ether compound suitably used may be a compound represented by the following formula other than the acyclic diether (1):

$$R^{54}\text{-}(OCHR^{53}CH_2)_x\text{-}OR^{55}$$

wherein $R^{54}$ and $R^{55}$ are each independently selected from the group consisting of a C1-C9 alkyl group free from fluorine, a phenyl group optionally substituted with a halogen atom, and a cyclohexyl group optionally substituted with a halogen atom, and may together form a ring; $R^{53}$s are each independently H or $CH_3$; and x is 0 to 10.

Examples of the alkyl group in the formula include a methyl group, an ethyl group, a propyl group, an isopropyl group, a butyl group, an isobutyl group, a pentyl group, an isopentyl group, a hexyl group, a heptyl group, an octyl group, and a nonyl group. An alkyl group having a carbon number of greater than 9 may cause poor polarity of the ether compound, which tends to cause reduced solubility of an alkali metal salt. Thus, the alkyl group preferably has a carbon number that is as small as possible, and is preferably a methyl group or an ethyl group, most preferably a methyl group.

Examples of the phenyl group optionally substituted with a halogen atom include, but are not limited to, a 2-chlorophenyl group, a 3-chlorophenyl group, a 4-chlorophenyl group, a 2,4-dichlorophenyl group, a 2-bromophenyl group, a 3-bromophenyl group, a 4-bromophenyl group, a 2,4-dibromophenyl group, a 2-iodophenyl group, a 3-iodophenyl group, a 4-iodophenyl group, and a 2,4-iodophenyl group.

Examples of the cyclohexyl group optionally substituted with a halogen atom include, but are not limited to, a 2-chlorocyclohexyl group, a 3-chlorocyclohexyl group, a 4-chlorocyclohexyl group, a 2,4-dichlorocyclohexyl group, a 2-bromocyclohexyl group, a 3-bromocyclohexyl group, a 4-bromocyclohexyl group, a 2,4-dibromocyclohexyl group, a 2-iodocyclohexyl group, a 3-iodocyclohexyl group, a 4-iodocyclohexyl group, and a 2,4-diiodocyclohexyl group.

$R^{53}$s are each H or $CH_3$ and are independent from each other in the case where x is 2 or greater; x is 0 to 10 and represents the number of ethylene oxide units repeated; and x is preferably 1 to 6, more preferably 2 to 5, most preferably 3 or 4.

Examples of the ether compound include tetrahydrofuran (THF), 1,3-dioxolane, 1,4-dioxane, a glyme, and derivatives thereof.

Ether compounds represented by the above formula may together form a ring. Examples of this cyclic compound include tetrahydrofuran (THF) and a derivative thereof, namely 2-methyltetrahydrofuran, in the case where x is 0, as well as 1,3-dioxolane and 1,4-dioxane in the case where x is 1.

The glyme is represented by the formula (2) (wherein $R^3$ is H and x is 1 or greater, and the formula represents a linear compound), and examples thereof include monoglyme (G1, x = 1), diglyme (G2, x = 2), triglyme (G3, x = 3), and tetraglyme (G4, x = 4). Examples of the monoglyme (G1) include methyl monoglyme and ethyl monoglyme, and examples of the diglyme (G2) include ethyl diglyme and butyl diglyme.

Using a glyme with x = 1 to 10 as the ether compound can improve the thermal stability, ion conductivity, and electrochemical stability of an electrolyte solution, leading to an electrolyte solution that can withstand high voltage. One of the ether compounds that may be used for an electrolyte solution may be used alone, or two or more thereof may be used in the form of mixture.

(Fluorinated ether compound)

The different solvent may be a fluorinated ether compound represented by the following formula (5):

$$Rf\text{-}(OR^{51})_{n1}\text{-}O\text{-}R^{52} \qquad (5)$$

wherein Rf is an alkyl group containing a fluorine atom and may form a C1-C5 branch or ring; $R^{51}$ is an alkyl group optionally containing a fluorine atom; $R^{52}$ is a C1-C9 alkyl group free from fluorine and may form a branch or ring; and n1 is 0 or 2.

Examples of the compound represented by the formula (5) include, but are not limited to, $HCF_2CF_2OCH_2CH_2CH_3$, $HCF_2CF_2OCH_2CH_2CH_2CH_3$, $HCF_2CF_2CH_2OCH_2CH_3$, $HCF_2CF_2CH_2OCH_2CH_2CH_3$, $HCF_2CF_2CH_2OCH_2CH_2CH_2CH_3$, $CF_3CHFCF_2OCH_2CH_3$, $CF_3CHFCF_2OCH_2CH_2CH_3$, and $HCF_2CF_2OCH_2CH_3$. Two or more compounds among these compounds may be mixed for use.

The fluorinated ether compound may be one containing a fluorinated ether represented by the following formula (5-1):

$$Rf1\text{-}(OR^{51})_{n1}\text{-}O\text{-}Rf2 \qquad (5\text{-}1)$$

wherein Rf1 and Rf2 are the same as or different from each other, and are each an alkyl group containing a fluorine atom; $R^{51}$ is an alkyl group optionally containing a fluorine atom; n1 is 0 or 2; and the carbon number per molecule is 5 or greater.

Examples of the fluorinated ether represented by the formula (5-1) include $HCF_2CF_2CH_2OCF_2CHFCF_3$, $HCF_2CF_2CH_2OCF_2CF_2H$, $CF_3CF_2CH_2OCF_2CHFCF_3$, and $CF_3CF_2CH_2OCF_2CF_2H$.

The fluorinated ether compound is preferably a fluorinated monoether. The solvent containing a fluorinated monoether in addition to the acyclic diether (1) can provide a lithium-sulfur secondary battery having much better cycle characteristics and generating much less gas.

Examples of the fluorinated monoether include compounds represented by the formula (5) or (5-1) wherein n1 = 0.

The "different solvent" used may include two or more thereof in combination. In the case where the electrolyte solution of the disclosure contains the "different solvent", the amount thereof is preferably 20 to 90% by mass of the whole amount of the electrolyte solution. This range is preferred to improve the output of a battery.

The "different solvent" used particularly preferably includes at least one selected from the group consisting of vinylene carbonate and a fluorinated monoether. In this case, the "different solvent" is contained in an amount of preferably 5 to 80% by mass, more preferably 10% by mass or more, still more preferably 20% by mass or more, while more

preferably 70% by mass or less, still more preferably 60% by mass or less of the whole amount of the electrolyte solution.

The electrolyte solution of the disclosure may contain a non-fluorinated ether compound, such as dimethoxyethane or 1,3-dioxolane, as the "different solvent", but the amount thereof is preferably small. The amount of the non-fluorinated ether compound is preferably 70% by mass or less, more preferably 65% by mass or less, still more preferably 60% by mass or less of the whole amount of the electrolyte solution.

The electrolyte solution of the disclosure also preferably contains no non-fluorinated ether compound.

(Lithium-ion-containing non-aqueous electrolyte)

The electrolyte solution of the disclosure contains a lithium-ion-containing non-aqueous electrolyte.

The lithium-ion-containing non-aqueous electrolyte is preferably a lithium salt. The lithium salt is represented by LiX, where X is a substance serving as a counter anion. One of the lithium salts may be used alone, or two or more of these may be used in the form of mixture.

X preferably includes, but is not limited to, at least one selected from the group consisting of Cl, Br, I, $BF_4$, $PF_6$, $CF_3SO_3$, $ClO_4$, $CF_3CO_2$, $AsF_6$, $SbF_6$, $AlCl_4$, bistrifluoromethanesulfonylamide (TFSA), $N(CF_3SO_2)_2$, $N(CF_3CF_2SO_2)_2$, $PF_3(C_2F_5)_3$, $N(FSO_2)_2$, $N(FSO_2)(CF_3SO_2)$, $N(CF_3CF_2SO_2)_2$, $N(C_2F_4S_2O_4)$, $N(C_3F_6S_2O_4)$, $N(CN)_2$, $N(CF_3SO_2)(CF_3CO)$, $R_4FBF_3$ (wherein $R_4F$ = n-$C_mF_{2m+1}$; m is an integer of 1 to 4; and n is normal), and $R_5BF_3$ (wherein $R_5$ = n-$C_pH_{2p+1}$; p is an integer of 1 to 5; and n is normal) . In terms of solubility in an ether compound and easy formation of complex structure, more preferred are $N(FSO_2)_2$, $N(CF_3SO_2)_2$, $N(CF_3CF_2SO_2)_2$, $PF_6$, and $C10_4$. Most preferred are $PF_6$ and $N(CF_3SO_2)_2$.

The non-aqueous electrolyte is preferably contained at a proportion of 3.0 to 30% by mass in the electrolyte solution. This range allows the electrolyte solution to be used as a good electrolyte solution. The lower limit is more preferably 5.0% by mass, still more preferably 8.0% by mass. The upper limit is more preferably 20% by mass, still more preferably 15% by mass.

In the electrolyte solution of the disclosure, the lower limit of the mixing ratio of the solvent and the non-aqueous electrolyte (solvent)/(non-aqueous electrolyte) is preferably 0.1 and the upper limit thereof is preferably 5.0 (in terms of mol). This range is preferred because a fluorinated ether well coordinates with an alkali metal ion. More preferably, the lower limit of the mixing ratio is 0.5 while the upper limit thereof is 4.0.

In addition to the aforementioned lithium salt compound, any of lithium salt compounds represented by the following formulas (hereinafter, also referred to as a "second lithium salt compound") may be used in combination. Two or more of the second lithium salt compounds may be used in combination.

[Chem. 20]

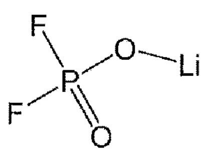

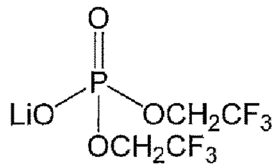

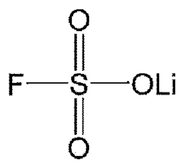

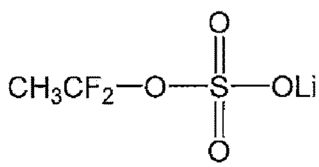

Combination use of these compounds is preferred so as to achieve an effect of extending the life of a battery and improving the output of the battery.

The second lithium salt compound is preferably contained at a proportion of 0.001 to 10% by mass of the whole amount of the electrolyte solution.

The lower limit of the amount of the second lithium salt is more preferably 0.01% by mass, still more preferably 0.1% by mass. The upper limit of the amount of the second lithium salt is more preferably 5% by mass, still more preferably 3% by mass.

The electrolyte solution of the disclosure may further contain a cyclic borate. The presence of a cyclic borate can lead to a better capacity retention.

The cyclic borate preferably includes, for example, but is not limited to, at least one selected from the group consisting of the following compounds.

[Chem. 21]

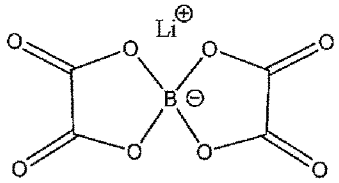

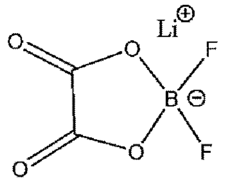

The electrolyte solution contains the aforementioned cyclic borate in an amount of preferably 0.01% by mass or more, more preferably 0.5% by mass or more. The upper limit is preferably, but not limited to, 1.0% by mass.

The electrolyte solution of the disclosure may contain a phosphate. The presence of a phosphate is preferred so as to extend the life of a battery and improve the output of the battery.

The phosphate is preferably contained in an amount of 0.001 to 10% by mass of the whole amount of the electrolyte solution.

The lower limit of the amount of the phosphate is more preferably 0.01% by mass, still more preferably 0.1% by mass. The upper limit of the amount of the phosphate is more preferably 5% by mass, still more preferably 3% by mass.

Specific examples of the phosphate include the following compounds:

phosphates such as (methyl)(2-propenyl)(2-propynyl)phosphate, (ethyl)(2-propenyl)(2-propynyl)phosphate, (2-butenyl)(methyl)(2-propynyl)phosphate, (2-butenyl)(ethyl)(2-propynyl)phosphate, (1,1-dimethyl-2-propynyl)(methyl)(2-propenyl)phosphate, (1,1-dimethyl-2-propynyl)(ethyl)(2-propenyl)phosphate, (2-butenyl)(1,1-dimethyl-2-propynyl)(methyl)phosphate, and (2-butenyl)(ethyl)(1,1-dimethyl-2-propynyl)phosphate; and

phosohorus-containing compounds such as trimethyl phosphite, triethyl phosphite, triphenyl phosphite, trimethyl phosphate, triethyl phosphate, triphenyl phosphate, dimethyl methylphosphonate, diethyl ethylphosphonate, dimethyl vinylphosphonate, diethyl vinylphosphonate, ethyl diethylphosphonoacetate, methyl dimethylphosphinate, ethyl diethylphosphinate, trimethyl phosphine oxide, triethyl phosphine oxide, bis(2,2-difluoroethyl) 2,2,2-trifluoroethyl phosphate, bis(2,2,3,3-tetrafluoropropyl) 2,2,2-trifluoroethyl phosphate, bis(2,2,2-trifluoroethyl)methyl phosphate, bis(2,2,2-trifluoroethyl)ethyl phosphate, bis(2,2,2-trifluoroethyl) 2,2-difluoroethyl phosphate, bis(2,2,2-trifluoroethyl) 2,2,3,3-tetrafluoropropyl phosphate, tributyl phosphate, tris(2,2,2-trifluoroethyl) phosphate, tris(1,1,1,3,3,3-hexafluoropropan-2-yl) phosphate, trioctyl phosphate, 2-phenylphenyldimethyl phosphate, 2-phenylphenyldiethyl phosphate, (2,2,2-trifluoroethyl)(2,2,3,3-tetrafluoropropyl)methyl phosphate, methyl 2-(dimethoxyphosphoryl)acetate, methyl 2-(dimethylphosphoryl)acetate, methyl 2-(diethoxyphosphoryl)acetate, methyl 2-(diethylphosphoryl) acetate, methyl methylenebisphosphonate, ethyl methylenebisphosphonate, methyl ethylenebisphosphonate, ethyl ethylenebisphosphonate, methyl butylenebisphosphonate, ethyl butylenebisphosphonate, 2-propynyl 2-(dimethoxyphosphoryl) acetate, 2-propynyl 2-(dimethylphosphoryl) acetate, 2-propynyl 2-(diethoxyphosphoryl) acetate, 2-propynyl 2-(diethylphosphoryl) acetate, tris(trimethylsilyl) phosphate, tris(triethylsilyl) phosphate, tris(trimethoxysilyl) phosphate, tris(trimethylsilyl) phosphite, tris(triethylsilyl) phosphite, tris(trimethoxysilyl) phosphite, and trimethylsilyl polyphosphate.

The electrolyte solution of the disclosure may be a gel electrolyte solution that is in the form of gel. The gel electrolyte solution has a structure in which a matrix polymer containing an ion-conductive polymer is impregnated with an electrolyte solution. The aforementioned electrolyte solution of the disclosure is used as this electrolyte solution. Examples of the ion-conductive polymer used as a matrix polymer include polyethylene oxide (PEG), polypropylene oxide (PPO), polyethylene glycol (PEG), polyacrylonitrile (PAN), a vinylidene fluoride-hexafluoropropylene (VDF-HEP) copolymer, poly(methyl methacrylate) (PMMA), and copolymers of any of these. Polyalkylene oxide polymers can well dissolve an electrolyte solution salt such as a lithium salt.

The electrolyte solution of the disclosure is for use in a lithium-sulfur secondary battery that includes: a positive electrode containing a sulfur-containing electrode active material that includes at least one selected from the group consisting of simple sulfur, lithium polysulfide ($Li_2S_n$: $1 < n < 8$), an organic sulfur compound, and an inorganic sulfur compound; and a negative electrode containing a material that occludes and releases a lithium ion. In other words, use of the electrolyte solution in such a lithium-sulfur secondary battery can particularly suitably provide a variety of the aforementioned effects. The positive electrode and the negative electrode will be specifically described below.

The disclosure also relates to a lithium-sulfur secondary battery including the aforementioned electrolyte solution as an essential component. Hereinafter, the lithium-sulfur secondary battery of the disclosure is also specifically described.

(Battery)

The lithium-sulfur secondary battery of the disclosure may have a structure in which multiple cells are stacked or rolled and housed in a case, wherein each of the cells includes the positive or negative electrode and its counter electrode placed apart from each other with a separator in between and the electrolyte solution is infiltrated into the separator. Current collectors of the positive or negative electrode and the counter electrode are extended to the outside of the case and electrically connected to respective tabs (terminals). The electrolyte solution may be a gel electrolyte solution.

<Sulfur-containing positive electrode>

The positive electrode contains at least one sulfur-containing electrode active material selected from the group consisting of simple sulfur, lithium polysulfide ($Li_2S_n$: 1 < n < 8), an organic sulfur compound, and an inorganic sulfur compound. Examples of the organic sulfur compound include an organic disulfide compound and a carbon sulfide compound. Examples of the inorganic sulfur compound include a metal polysulfide represented by $MS_x$ wherein M = Ni, Cu, or Fe and 0 < x < 2. Preferably used is a composite material of a sulfur-containing electrode active material and a carbon material.
Using the composite material is preferred because the sulfur-containing electrode active material can present in pores to reduce the resistance.
To achieve much better cycle performance and to further reduce the overpotential, the sulfur-containing electrode active material contained in the positive electrode active material in the composite material is contained in an amount of preferably 40 to 99% by mass, more preferably 50% by mass or more, still more preferably 60% by mass or more, while more preferably 90% by mass or less, still more preferably 85% by mass or less of the composite material. In the case where the positive electrode active material is simple sulfur, the amount of sulfur contained in the positive electrode active material is equal to the amount of the simple sulfur.
The amount of sulfur is obtainable by determining the weight change during heating from room temperature to 600°C at a temperature-increasing rate of 10°C/m in a helium atmosphere.
To achieve much better cycle performance and to further reduce the overpotential, the carbon material in the composite material is contained in an amount of preferably 1 to 60% by mass, more preferably 10% by mass or more, still more preferably 15% by mass or more, while more preferably 45% by mass or less, still more preferably 40% by mass or less of the positive electrode active material.
The carbon material used in the composite material of sulfur and a carbon material preferably has pores. The "pores" include micropores, mesopores, and macropores. The micropores refer to pores having a diameter of 0.1 nm or greater and 2 nm or smaller. The mesopores refer to pores having a diameter of greater than 2 nm and 50 nm or smaller. The macropores refer to pores having a diameter of greater than 50 nm.
In the disclosure, the carbon material used is particularly preferably a carbon material having a pore volume ratio, which is the ratio of micropore volume and mesopore volume (micropores/mesopores), of 1.5 or higher. The pore volume ratio is more preferably 2.0 or higher. The upper limit of the pore volume ratio may be, but is not limited to, 3.0 or lower. The carbon material having pores can seemingly greatly reduce dissolution of the positive electrode active material. The pore volume does not take the macropore volume into account.
The BET specific surface area and the average diameter and pore volume of the pores in the disclosure can be determined using a nitrogen adsorption isotherm obtained by causing samples (carbon material and composite material) to adsorb nitrogen gas at a liquid nitrogen temperature. Specifically, the BET specific surface area of a sample can be determined by the Brunauer-Emmett-Teller (BET) method using a nitrogen adsorption isotherm; and the average diameter and pore volume of the pores of a sample can be determined by the quenched solid density functional theory (QSDFT) using a nitrogen adsorption isotherm. To determine these values, a specific surface area/pore distribution measurement device (Autosorb) available from Quantachrome Instruments may be used as a measurement device.
To achieve much better cycle performance and to further reduce the overpotential, the positive electrode active material is preferably contained in the pores of the carbon material in the composite material. The presence of the positive electrode active material in the pores can seemingly greatly reduce dissolution of the positive electrode active material.
The presence of the positive electrode active material in the pores can be confirmed by determining the BET specific surface area of the composite material. In the case where the positive electrode active material is contained in the pores, the BET specific surface area of the composite material is smaller than the BET specific surface area of the carbon material alone.
The carbon material is preferably porous carbon having macropores and mesopores.
To achieve much better cycle performance and to further reduce the overpotential, the carbon material preferably

has a BET specific surface area of 500 to 2500 $m^2/g$. The BET specific surface area is more preferably 700 $m^2/g$ or greater and more preferably 2000 $m^2/g$ or smaller.

To achieve much better cycle performance and to further reduce the overpotential, the carbon material preferably has an average particle size of 1 to 50 nm. The average particle size is more preferably 2 nm or greater and more preferably 30 nm or smaller.

The carbon material may be produced by any production method and may be produced by, for example, a method in which a composite of an easily decomposable polymer and a persistent (thermosetting) organic component is formed and, from this composite, the easily decomposable polymer is removed. For example, the carbon material may be produced by preparing an ordered nanostructured polymer utilizing the organic-organic interaction between a phenol resin and a thermolyzable polymer and then carbonizing the resulting polymer.

The composite material may be produced by any production method and may be produced by, for example, a method of evaporating the positive electrode active material to cause it to deposit on the carbon material. The deposition may be followed by heating at about 150°C to remove an excessive portion of the positive electrode active material.

In addition to the aforementioned sulfur-containing electrode active material, the positive electrode may contain a thickening agent, a binding agent, and a conductive agent. Slurry (paste) of these electrode materials may then be applied to a conductive carrier (current collector) and dried so that the electrode materials are supported on the carrier, whereby a positive electrode can be produced.

Examples of the current collector include those prepared by forming conductive metal such as aluminum, nickel, copper, or stainless steel into foil, mesh, expanded grid (expanded metal), or perforated metal. Alternatively, the current collector used may be resin having conductivity or resin containing conductive filler. The thickness of the current collector may be, but is not limited to, 5 to 30 μm, for example.

The amount of the sulfur-containing electrode active material in the electrode materials (the sum of the amounts of the sulfur-containing electrode active material and the other components, excluding the current collector) is preferably 50 to 98% by mass, more preferably 65 to 75% by mass. The active material in an amount within the above range is preferred because it can lead to a high energy density.

The thickness of the electrode materials (thickness of one side of the coating layer) is preferably 10 to 500 μm, more preferably 20 to 300 μm, still more preferably 20 to 150 μm.

The binding agent may be, for example, polyethylene (PE), polypropylene (PP), polyethylene terephthalate (PET), polyether nitrile (PEN), polyimide (PI), polyamide (PA), polytetrafluoroethylene (PTFE), styrene-butadiene rubber (SBR), polyacrylonitrile (PAN), polymethyl acrylate (PMA), polymethyl methacrylate (PMMA), polyvinyl chloride (PVC), polyvinylidene fluoride (PVDF), polyvinyl alcohol (PVA), polyacrylic acid (PAA), lithium polyacrylate (PAALi), a polyalkylene oxide such as a ring-opening polymer of ethylene oxide or monosubstituted epoxide, or a mixture of any of these.

Examples of the thickening agent include carboxymethyl cellulose, methyl cellulose, hydroxymethyl cellulose, ethyl cellulose, polyvinyl alcohol, oxidized starch, phosphorylated starch, casein, and salts of these. One of these materials may be used alone or two or more thereof may be used in any combination at any ratio.

The conductive agent is an additive blended so as to improve the conductivity, and examples thereof include carbon powders such as graphite, ketjenblack, inverse opal carbon, and acetylene black, and a variety of carbon fibers such as vapor grown carbon fibers (VGCF) and carbon nanotube (CNT). Alternatively, the electrode materials may include a supporting salt (component contained in an electrolyte solution to be described later).

<Negative electrode>

The negative electrode in the lithium-sulfur secondary battery of the disclosure contains a material that occludes and releases a lithium ion. The negative electrode active material contained in the negative electrode acts to occlude and release an alkali metal ion. The negative electrode active material preferably includes at least one selected from the group consisting of lithium, sodium, carbon, silicon, aluminum, tin, antimony, and magnesium. More specifically, any of conventionally known negative electrode materials may be used, including metal materials such as lithium titanate, lithium metal, sodium metal, lithium aluminum alloy, sodium aluminum alloy, lithium tin alloy, sodium tin alloy, lithium silicon alloy, sodium silicon alloy, lithium antimony alloy, and sodium antimony alloy; and carbon materials such as crystalline carbon materials and amorphous carbon materials, e.g., natural graphite, artificial graphite, carbon black, acetylene black, graphite, activated carbon, carbon fiber, coke, soft carbon, and hard carbon. To provide a battery having an excellent capacity and excellent input and output characteristics, preferably used among these is a carbon material, lithium, or a lithium transition metal complex oxide. In some cases, two or more negative electrode active materials may be used in combination.

The negative electrode may also contain the aforementioned active material, binding agent, and conductive agent. These electrode materials may then be supported on a conductive carrier (current collector), whereby a negative electrode can be produced. The current collector used may be the same as one described above.

A separator is provided between the positive electrode and the negative electrode in common cases. Examples

of the separator include a glass fiber separator, polymer porous sheet, and nonwoven fabric that can absorb and retain an electrolyte solution to be described later. The porous sheet may include a microporous polymer. Examples of the polymer constituting this porous sheet include polyolefins such as polyethylene (PE) and polypropylene (PP); a PP/PE/PP trilayer stack; polyimide; and aramid. In particular, a polyolefin microporous separator and a glass fiber separator are preferred because they are chemically stable to an organic solvent and can lead to low reactivity with an electrolyte solution. The thickness of a separator including a porous sheet is preferably, but not limited to, 4 to 60 um for a single layer or for multiple layers in total in applications of a secondary battery for vehicle motor driving. Preferably, the separator including a porous sheet has a micropore size of at most 10 um or smaller (about 10 to 100 nm in common cases) and a porosity of 20 to 80%.

The nonwoven fabric used may be one of conventionally known ones such as cotton, rayon, acetate, nylon (registered trademark), polyester, polyolefins, e.g., PP and PE, polyimide, and aramid or a mixture of any of these. A nonwoven fabric separator preferably has a porosity of 50 to 90%. The nonwoven fabric separator preferably has a thickness of 5 to 200 μm, particularly preferably 10 to 100 um. A thickness of smaller than 5 um may cause poor retainability of an electrolyte solution, while a thickness of greater than 200 um may cause an increased resistance.

A module including the lithium-sulfur secondary battery is also encompassed by the disclosure.

It should be appreciated that a variety of modifications and changes in the structure and other details may be made to the aforementioned embodiments without departing from the spirit and scope of the claims.

EXAMPLES

The disclosure is more specifically described hereinbelow with reference to examples, but the disclosure is not limited to these examples.

Examples and Comparative Examples

(Preparation of electrolyte solution)

The components were mixed at compositions shown in Table 4, whereby non-aqueous electrolyte solutions were obtained.

(Production of coin-type lithium-sulfur secondary battery)

A composite material, which serves as a carbon material and a positive electrode active material, containing a predetermined type of sulfur (sulfur content: 70% by mass), carbon black, which serves as a conductive material, carboxymethyl cellulose (CMC) dispersed in pure water, and styrene-butadiene rubber were mixed at a solid content ratio of 92/3/2.5/2.5 (ratio by mass%), whereby a positive electrode mixture slurry was prepared. The resulting positive electrode mixture slurry was uniformly applied to an aluminum foil current collector having a thickness of 25 um and then dried, followed by compression using a press. Thereby, a positive electrode was produced. This positive electrode laminate was stamped to provide a 1.6-cm-diameter piece, whereby a circular positive electrode was produced.

Separately, the negative electrode produced was a stamped, 1.6-cm-diameter circular lithium foil.

(Production of pre-test cell)

The positive electrode and the negative electrode were placed to face each other with a 25-μm-thick microporous polypropylene film (separator) in between. One of the non-aqueous electrolyte solutions prepared above was injected thereinto and the electrolyte solution was made to sufficiently permeate into the components such as the separator. The workpiece was then sealed, pre-discharged, pre-charged, and aged, whereby a coin-type lithium-sulfur secondary battery was produced.

The resulting coin-type lithium-sulfur secondary battery was subjected to evaluation with the following criteria.

(Cycle test)

The secondary battery produced above was subjected to a cycle test at 45°C. In the cycle test, the secondary battery was charged to 2.9 V at a constant current corresponding to 0.2 C and discharged to 1.0 V at a constant current of 0.1 C. This cycle was repeated for 100 cycles. Here, 1 C means the current value at which the reference capacity of the battery is discharged in one hour; for example, 0.2 C refers to 1/5 of this current value. The discharge capacity after 100 cycles is shown in Table 4.

(Amount of gas generated)

The volume of the secondary battery produced above and the volume of the secondary battery after the 100 cycles were measured by the Archimedes' method, and the volume change was used to determine the amount (ml) of gas generated.

The results calculated are shown in Table 4, with the value in Comparative Example 1 taken as 100.

The symbols for the components shown in Table 4 represent the respective compounds shown in any of Tables 1 to 3.

[Table 1]

| | | Structural formula | $\Sigma\{\sigma \times P(\sigma)\}$ |
|---|---|---|---|
| Solvent 1 | A-1 | 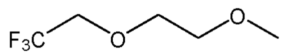 | 0.19 |
| | A-2 | 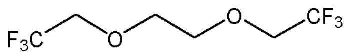 | 0.13 |
| | A-3 | 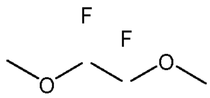 | 0.02 |
| | A-4 | 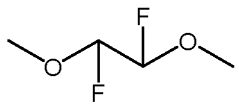 | 0.11 |
| | A-5 | 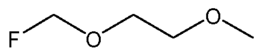 | 0.21 |
| | A-6 | 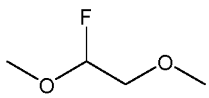 | 0.18 |
| | A-7 | 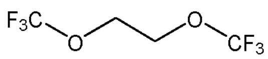 | 0.00004 |
| | A-8 | 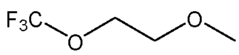 | 0.11 |
| | A-9 | 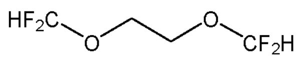 | 0.05 |
| | A-10 | 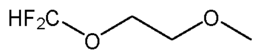 | 0.15 |
| | A-11 | 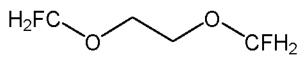 | 0.16 |
| | A-12 | 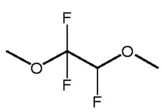 | 0.06 |
| | A-13 | 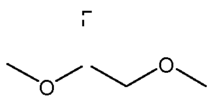 | 0.1 |

[Table 2]

| | | Structural formula | Σ{σ×P(σ)} |
|---|---|---|---|
| Different solvent | DOL | 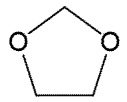 | 0.21 |
| | DME | 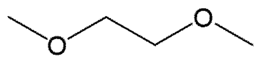 | 0.24 |
| | B-1 | 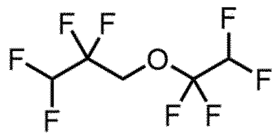 | - |
| | VC | 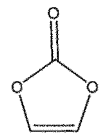 | - |

[Table 3]

| | | Structural formula |
|---|---|---|
| Lithium salt | LiFSI | 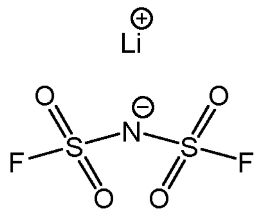 |
| | LiTFSI | 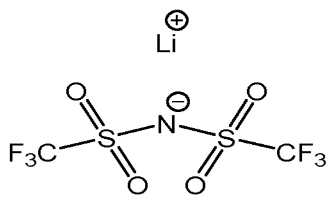 |
| | LiBETI | 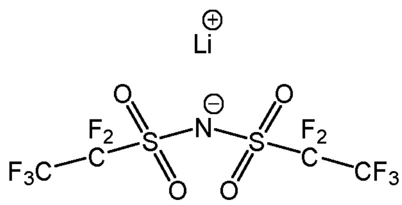 |

[Table 4]

| | Lithium salt | Solvent 1 | | Different solvent 1 | | Different solvent 2 | | Discharge capacity after 100 cycles | Amount of gas |
|---|---|---|---|---|---|---|---|---|---|
| | (1M) | Type | Amount (mass%) | Type | Amount (mass%) | Type | Amount (mass%) | (mAh/g) | (Relative value with Comparative Example 1 taken as 100) |
| Example 1 | LiTFSI | A-1 | 50 | B-1 | 50 | - | - | 980 | 15 |
| Example 2 | LiTFSI | A-1 | 50 | VC | 50 | - | - | 990 | 46 |
| Example 3 | LiTFSI | A-1 | 50 | DOL | 50 | - | - | 882 | 70 |
| Example 4 | LiTFSI | A-1 | 50 | DME | 50 | - | - | 882 | 75 |
| Example 5 | LiTFSI | A-1 | 20 | DOL | 40 | DME | 40 | 833 | 90 |
| Example 6 | LiTFSI | A-5 | 50 | VC | 50 | - | - | 1019 | 48 |
| Example 7 | LiTFSI | A-6 | 50 | VC | 50 | - | - | 1009 | 48 |
| Example 8 | LiTFSI | A-11 | 50 | VC | 50 | - | - | 951 | 42 |
| Example 9 | LiTFSI | A-10 | 50 | VC | 50 | - | - | 931 | 40 |
| Example 10 | LiTFSI | A-2 | 50 | VC | 50 | - | - | 882 | 35 |
| Example 11 | LiTFSI | A-8 | 50 | VC | 50 | - | - | 862 | 30 |
| Example 12 | LiTFSI | A-4 | 50 | VC | 50 | - | - | 833 | 26 |
| Example 13 | LiTFSI | A-13 | 50 | VC | 50 | - | - | 833 | 26 |
| Example 14 | LiTFSI | A-12 | 50 | VC | 50 | - | - | 813 | 25 |
| Example 15 | LiTFSI | A-9 | 50 | VC | 50 | - | - | 784 | 20 |
| Example 16 | LiTFSI | A-3 | 50 | VC | 50 | - | - | 764 | 15 |
| Example 17 | LiTFSI | A-7 | 50 | VC | 50 | - | - | 755 | 10 |
| Example 18 | LiTFSI | A-12 | 5 | DOL | 50 | B-1 | 45 | 686 | 41 |
| Example 19 | LiTFSI | A-12 | 10 | DOL | 50 | B-1 | 40 | 725 | 38 |
| Example 20 | LiTFSI | A-12 | 30 | DOL | 50 | B-1 | 20 | 735 | 35 |
| Example 21 | LiTFSI | A-12 | 80 | DOL | 20 | - | - | 833 | 20 |
| Example 22 | LiFSI | A-3 | 50 | VC | 50 | - | - | 686 | 11 |

(continued)

| | Lithium salt | Solvent 1 | | Different solvent 1 | | Different solvent 2 | | Discharge capacity after 100 cycles | Amount of gas |
|---|---|---|---|---|---|---|---|---|---|
| | (1M) | Type | Amount (mass%) | Type | Amount (mass%) | Type | Amount (mass%) | (mAh/g) | (Relative value with Comparative Example 1 taken as 100) |
| Example 23 | LIBETI | A-3 | 50 | VC | 50 | - | - | 735 | 12 |
| Example 24 | LiPF6 | A-3 | 50 | VC | 50 | - | - | 686 | 14 |
| Comparative Example 1 | LiTFSI | - | - | DME | 50 | VC | 50 | 539 | 100 |
| Comparative Example 2 | LiTFSI | - | - | DME | 50 | DOL | 50 | 588 | 150 |
| Comparative Example 3 | LiTFSI | - | - | DOL | 50 | B-1 | 50 | 490 | 125 |
| Comparative Example 4 | LiTFSI | - | - | DME | 100 | - | - | 441 | 200 |

INDUSTRIAL APPLICABILITY

A lithium-sulfur secondary battery including the electrolyte solution of the disclosure can be used for a variety of power sources such as power sources for cell phones and power sources for automobiles.

## Claims

1. An electrolyte solution for use in a lithium-sulfur secondary battery that includes: a positive electrode containing a sulfur-containing electrode active material that includes at least one selected from the group consisting of simple sulfur, lithium polysulfide ($Li_2S_n$: 1 < n < 8), an organic sulfur compound, and an inorganic sulfur compound; and a negative electrode containing a material that occludes and releases a lithium ion, the electrolyte solution comprising:

   a non-aqueous electrolyte; and
   a solvent,
   the solvent containing an acyclic diether having a $\Sigma\{\sigma \times P(\sigma)\}$ value, where $\sigma \geq 0.01$ (e/Å$^2$), falling within a range indicated by the following formula (1):

   $$0 < \Sigma\{\sigma \times P(\sigma)\} < 0.24 \quad (1)$$

   wherein σ represents a screening charge density and P(σ) represents an σ-profile.

2. The electrolyte solution according to claim 1, wherein the acyclic diether is a fluorinated acyclic diether.

3. The electrolyte solution according to claim 1 or 2, wherein the acyclic diether includes at least one selected from the group consisting of a compound represented by the following formula (A) or a compound represented by the following formula (B),

   the formula (A) being:

   [Chem. 1]

   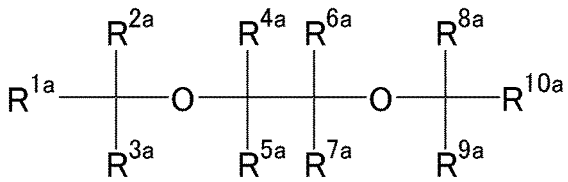

   wherein $R^{1a}$ to $R^{10a}$ are each independently a halogen atom, a hydrogen atom, an alkyl group having a carbon number of 2 or smaller, or a fluorinated alkyl group having a carbon number of 2 or smaller, and at least one of $R^{1a}$ to $R^{10a}$ is a halogen atom or a fluorinated alkyl group having a carbon number of 2 or smaller,
   the formula (B) being:

   [Chem. 2]

   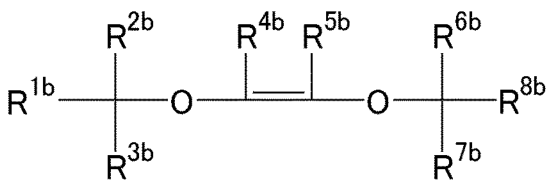

   wherein $R^{1b}$ to $R^{8b}$ are each independently a halogen atom, a hydrogen atom, an alkyl group having a carbon number of 2 or smaller, or a fluorinated alkyl group having a carbon number of 2 or smaller.

4. The electrolyte solution according to any one of claims 1 to 3, wherein the acyclic diether includes at least one

selected from the group consisting of compounds represented by the following formulas:

[Chem. 3]

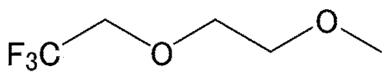
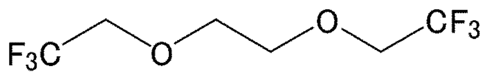
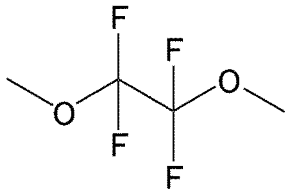
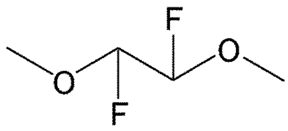
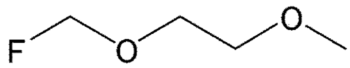
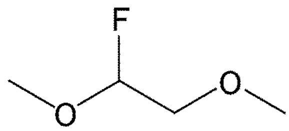
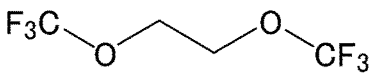
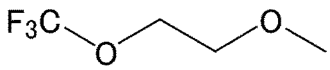
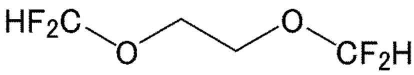
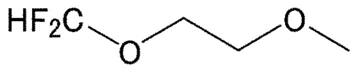
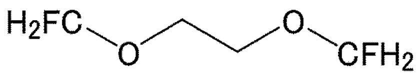
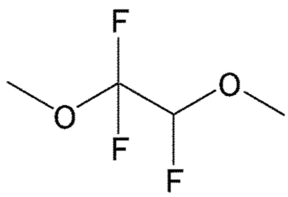
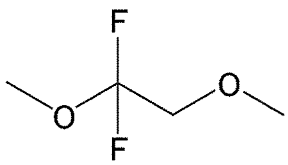

**5.** The electrolyte solution according to any one of claims 1 to 4, wherein the acyclic diether is contained in an amount of 3 to 90% by mass of a whole amount of the electrolyte solution.

**6.** A lithium-sulfur secondary battery comprising:

a positive electrode containing a sulfur-containing electrode active material that includes at least one selected from the group consisting of simple sulfur, lithium polysulfide ($Li_2S_n$: 1 < n < 8), an organic sulfur compound, and an inorganic sulfur compound; and
a negative electrode containing a material that occludes and releases a lithium ion,
wherein the electrolyte solution according to any one of claims 1 to 5 is used.

**7.** A module comprising the lithium-sulfur secondary battery according to claim 6.

## INTERNATIONAL SEARCH REPORT

International application No.
**PCT/JP2023/038042**

**A. CLASSIFICATION OF SUBJECT MATTER**

***H01M 10/0569***(2010.01)i; ***H01M 4/38***(2006.01)i; ***H01M 4/58***(2010.01)i; ***H01M 4/60***(2006.01)i; ***H01M 10/052***(2010.01)i
FI: H01M10/0569; H01M4/38 Z; H01M4/58; H01M4/60; H01M10/052

According to International Patent Classification (IPC) or to both national classification and IPC

**B. FIELDS SEARCHED**

Minimum documentation searched (classification system followed by classification symbols)

H01M10/0569; H01M4/38; H01M4/58; H01M4/60; H01M10/052

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

**C. DOCUMENTS CONSIDERED TO BE RELEVANT**

| Category* | Citation of document, with indication, where appropriate, of the relevant passages | Relevant to claim No. |
|---|---|---|
| X | US 2018/0076485 A1 (UCHICAGO ARGONNE, LLC) 15 March 2018 (2018-03-15) claims, paragraphs [0020]-[0023], fig. 3 | 1-7 |
| A | JP 2013-101766 A (ASAHI GLASS CO., LTD.) 23 May 2013 (2013-05-23) | 1-7 |
| A | JP 2011-187163 A (PANASONIC CORP.) 22 September 2011 (2011-09-22) | 1-7 |
| A | JP 2010-238510 A (DAIKIN INDUSTRIES, LTD.) 21 October 2010 (2010-10-21) | 1-7 |

☐ Further documents are listed in the continuation of Box C. ☑ See patent family annex.

* Special categories of cited documents:
"A" document defining the general state of the art which is not considered to be of particular relevance
"E" earlier application or patent but published on or after the international filing date
"L" document which may throw doubts on priority claim(s) or which is cited to establish the publication date of another citation or other special reason (as specified)
"O" document referring to an oral disclosure, use, exhibition or other means
"P" document published prior to the international filing date but later than the priority date claimed
"T" later document published after the international filing date or priority date and not in conflict with the application but cited to understand the principle or theory underlying the invention
"X" document of particular relevance; the claimed invention cannot be considered novel or cannot be considered to involve an inventive step when the document is taken alone
"Y" document of particular relevance; the claimed invention cannot be considered to involve an inventive step when the document is combined with one or more other such documents, such combination being obvious to a person skilled in the art
"&" document member of the same patent family

| Date of the actual completion of the international search | Date of mailing of the international search report |
|---|---|
| **12 December 2023** | **26 December 2023** |
| Name and mailing address of the ISA/JP<br>**Japan Patent Office (ISA/JP)**<br>**3-4-3 Kasumigaseki, Chiyoda-ku, Tokyo 100-8915**<br>**Japan** | Authorized officer<br><br>Telephone No. |

Form PCT/ISA/210 (second sheet) (January 2015)

**INTERNATIONAL SEARCH REPORT**
**Information on patent family members**

International application No.
**PCT/JP2023/038042**

| Patent document cited in search report | Publication date (day/month/year) | Patent family member(s) | Publication date (day/month/year) |
| --- | --- | --- | --- |
| US 2018/0076485 A1 | 15 March 2018 | US 2019/0237807 A1<br>claims, paragraphs [0020]-[0023], fig. 3 | |
| JP 2013-101766 A | 23 May 2013 | (Family: none) | |
| JP 2011-187163 A | 22 September 2011 | (Family: none) | |
| JP 2010-238510 A | 21 October 2010 | (Family: none) | |

Form PCT/ISA/210 (patent family annex) (January 2015)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 2021090666 A